# EUROPEAN PATENT SPECIFICATION

(11) **EP 4 134 676 B1**
(45) Date of publication and mention of the grant of the patent: **29.05.2024**
(21) Application number: 21190791.0
(22) Date of filing: 11.08.2021
(51) Int. Cl.: G01N 35/00, B01L 9/06, B01L 3/00, G01N 35/04

(54) **APPARATUS, METHOD AND SYSTEM FOR PROCESSING SAMPLE TUBES**
VORRICHTUNG, VERFAHREN UND SYSTEM ZUR BEHANDLUNG VON PROBENRÖHRCHEN
APPAREIL, PROCÉDÉ ET SYSTÈME DE TRAITEMENT DE TUBES D'ÉCHANTILLONS

(43) Date of publication of application: 15.02.2023
(73) Proprietor: Beckman Coulter, Inc., Brea, CA 92821 (US)
(72) Inventor: MÜLLER, Martin, 83727 Schliersee (DE)
(74) Representative: Maiwald GmbH

(56) References cited:
- WO-A1-2014/145157
- JP-A- 2004 345 807
- US-A- 5 153 416
- US-A1- 2019 277 869
- US-B2- 10 012 661

## Description

### Technical Field

The following description relates to an apparatus, a method and a system for processing sample tubes, in particular sample tubes that are to be held in a sample tube rack.

### Background

Sample tubes are used for holding samples to be tested, e.g. biological samples drawn from a human or animal patient, such as blood samples. Usually the biological sample is collected at a first location, e.g. by a phlebotomist, and is then transported to a second location for testing/analysis, e.g. to a laboratory. Sample tube racks (or "tube racks") are used for retaining one or more sample tubes, in particular to ensure that the sample tubes are kept in a substantially upright orientation, especially during transport.

Each sample tube is associated with a test request, which is conventionally a paper form that is provided to the laboratory separately from the sample tubes or racks. A test request contains information about one or more tests to be performed on the sample in the sample tube and this information is manually entered into the laboratory information system (LIS). Until the test request is available in the LIS, the corresponding sample tube cannot be processed, and this may take more than 30 minutes after the arrival at the laboratory. Then the sample tubes are manually sorted, e.g. according to their priority, into different equipment pieces, e.g. centrifuge adapters or analyzer racks.

Document US 2019/277869 A1 discloses an analyser system for in vitro diagnostics including a sample handler module having a robot arm that delivers samples from drawers into carriers on a linear synchronous motor automation track. Samples are delivered via the automation track to individual track sections associated with individual analyser modules. Analyzer modules aspirate sample portions directly from the sample carriers and perform analysis thereon.

Document US 10 012 661 B2 discloses methods and systems that allow scanning of barcode information on sample vessels in situ in a tray. A laboratory instrument includes one or more trays, each having a plurality of recesses, which are configured to hold a plurality of sample vessels, and a plurality of openings between the recesses. The instrument further includes one or more rods that are separate from the trays, each having optical elements configured to read barcode information on the sample vessels. The rods are configured to move through the plurality of openings.

Document JP 2004 345807 A discloses at least one readable/writable storage medium for storing information on small-sized containers stored in a rack, wherein the information for identifying the rack is installed in this storing/transporting rack storing two or more small-sized container.

Document WO 2014/145157 A1 discloses a database that automatically tracks the movement of a specimen holder from a rack slot of one specimen rack to a rack slot of the other specimen rack, when a user moves the specimen holder from one specimen rack to another specimen rack. To track movement of the specimen holder, the user places a specimen rack on a specimen reader that determines the location of any specimen holders in slots of the specimen rack. The user removes a particular specimen holder from a particular rack slot of the specimen rack and the database is updated to reflect removal of the particular specimen holder from the specimen rack. The user places another specimen rack on the reader and inserts the newly removed specimen holder in a slot of the another specimen rack. The database is updated to reflect insertion of the specimen holder in a particular slot of the another rack.

This conventional way of processing sample tubes is inefficient and error-prone.

### Summary

It is an object of the invention to provide means for processing sample tubes in an efficient and faultless manner.

The achievement of this object in accordance with the invention is set out in the independent claims. Further developments of the invention are the subject matter of the dependent claims.

In the following, terms like "vertical" and horizontal" are to be interpreted with respect to the frame of reference of the Earth.

According to one aspect, an apparatus is provided. The apparatus is configured to interact with a tube rack, the tube rack comprising a data storage element, and the apparatus comprises:
- a data reading unit configured to read first data from a sample tube when the sample tube is at a reading position with respect to the data reading unit, wherein the sample tube is not contained in the tube rack when at the reading position;
- a detection unit comprising at least one sensor configured to detect the presence of the sample tube in the tube rack if the tube rack is at a detection position with respect to the at least one sensor;
- a computing unit configured to:
   provide, based on the first data, an indication of a location for the sample tube in the tube rack; and
   write second data to the data storage element when the at least one sensor detects the presence of the sample tube in the tube rack, wherein the second data comprise at least part of the first data.

The tube rack comprises a data storage element, i.e. an element configured to store data, in particular digital data. The data storage element may be built-in, i.e. it may be permanently and securely integrated in the tube rack. The data storage element may be a machine-readable and -writable memory, e.g. a memory chip. Exemplarily, the memory chip may be part of a radio-frequency identification (RFID) tag. In this case, the whole RFID tag, i.e. including the antenna and the substrate, may be comprised in the tube rack. The data storage element may have an identifier for the tube rack stored thereon, e.g. a globally unique identifier (GUID).

The tube rack is configured to receive at least one sample tube, preferably a plurality of sample tubes. Accordingly, the tube rack may comprise at least one receptacle for accommodating at least one corresponding sample tube.

A sample tube is any container configured to receive and hold a biological sample, in particular blood. The sample tube comprises a closed tube bottom (providing a first end of the sample tube) and an opposite (second) end of the sample tube, namely an open end configured to enable insertion of a sample, which may be closed by a cap. Accordingly, a sample tube may comprises a vessel and a cap (or "tube cap"). Prior to receiving the sample, the sample tube may be empty or may contain one or more substances such as reagents.

The apparatus is configured to interact with the tube rack. The interaction may occur through contact between (a part of) the apparatus and (a part of) the tube rack, e.g. the apparatus may fittingly accommodate the tube rack, and/or may be contactless, e.g. a short-range wireless communication such as Bluetooth or near-field communication (NFC). Further details about the interaction between the apparatus and the tube rack will be described below.

The apparatus comprises a data reading unit configured to read first data from the sample tube when the sample tube is arranged at a reading position with respect to the data reading unit, wherein the sample tube contains a sample. In other words, the reading position is a physical location defined in relation to the data reading unit and it is defined such that it enables the data reading unit to access first data from the sample tube. The reading position may be at a given distance from the data reading unit.

The sample tube is not contained in a sample tube rack when at the reading position. Accordingly, the first data read while the sample tube is outside of a tube rack and at the reading position. Conversely, as described below, the sample tube is held in the sample tube rack when the second data are written to the data storage element of the tube rack, while the tube rack is at the detection position.

The first data are read without a physical contact between the data reading unit and the sample tube. Exemplarily, the data reading unit may comprise at least one of an optical scanner, an RIFD reader, an NFC-enabled device and a camera. The data reading unit may be manually or automatically activated. In the latter case, the data reading unit may be activated by a trigger sensor that detects the presence of the sample tube, or the presence of an indicium - e.g. a bar code - present on the surface of the sample tube, at the reading position. In other examples, the data reading unit may be always kept on.

Accordingly, the apparatus may comprise this trigger sensor, which may e.g. be a camera sensor, a light sensor or a weight sensor. The trigger sensor is configured to set off the reading of the first data by the data reading unit. In other words, the trigger sensor may signal to the data reading unit that the sample tube is at the reading position. In some cases, the trigger sensor may directly activate the data reading unit, in other cases, the computing unit described below may be involved in the activation of the data reading unit based on the detection by the trigger sensor.

The expression "read first data from the sample tube" is used herein to indicate that the data reading unit can obtain the first data thanks to the sample tube, i.e. in virtue of the presence of the sample tube at the reading position. In other words, there is at least one feature or element of the sample tube that provides the data reading unit with means for obtaining the first data.

In particular, the first data may be stored in an indicium on the sample tube. The type of indicium and the type of data reading unit match each other, e.g. a barcode or a QR code can be decoded by an optical scanner. The indicium may be securely affixed, e.g. by means of adhesive, to the sample tube, for instance to its wall or its cap. The reading position may be such that the distance and/or orientation of the indicium with respect to the data reading unit satisfies predetermined criteria that enable the reading operation. Additionally or alternatively, the first data may reside in a feature of the sample tube itself, such as its shape or cap color.

In one example, the first data are "directly" read from the sample tube, meaning that the information content of the first data is fully present on the sample tube, although it may need processing/interpretation. For instance, the color of the cap may be directly obtained from the sample tube, by processing an image of the cap, or digital information may be encoded in an RFID microchip and decoded by an RFID reader.

In another example, the first data are "indirectly" read from the sample tube, meaning that the sample tube only acts as an intermediary between the source of the first data (e.g. a remote database) and the data reading unit. In other words, the data reading unit obtains from the sample tube a link for retrieving the first data from a source. For instance, a QR code on the sample tube may be scanned by the data reading unit to obtain such a link. Of course, in some cases, a part of the information in the first data may be directly read and another part may be indirectly read.

Exemplarily, the first data may comprise one or more of: test data, patient data, tube data, sample data and priority data. The test data comprise information about one or more tests to be performed on a sample contained in the sample tube and may include for example one or more of the following for each test: an identifier of the test, such as an alphanumeric string; an identifier of one or more pieces of equipment for carrying out the test; or one or more instructions for handling the sample prior to or during or after the test (such as centrifuging or aliquoting, including e.g. concentration or dilution indications, centrifugation parameters like g-force and spin time).

In particular, the test data may comprise a test request.

The patient data comprise information about the patient to which the sample contained in the sample tube belongs and may include for example one or more of the following: an identifier of the patient (e.g. a name or a unique ID), personal data such as age, gender and so on, insurance number, vital signs measurements such as blood pressure, medical history including pre-existing conditions, indications of health problems like fever, pain, or psychological issues.

The tube data comprise information about the sample tube and may include for example one or more of the following: sample tube identifier, type of sample tube (e.g. color and/or shape), color of the cap of the sample tube, volume of the sample tube, minimum and maximum fill level (when applicable), material of the sample tube, information about reagents comprised in the tube (e.g. coagulation agents, gel components), or information about liquid level diverters (e.g. in case of false bottom tubes).

The sample data comprise information about the sample contained in the sample tube and may include for example one or more of the following: type of sample, sample volume, phlebotomy time (i.e. time at which the sample was drawn), clotting time, expiration date (i.e. date at which the sample is considered degraded and may be disposed of), storage conditions like temperature, or name and quantity of one or more substances mixed in the sample such as reagents.

The priority data comprise information about the priority of the sample, i.e. the rank of the sample for being processed with respect to other samples. The priority data may include an indication of high priority, e.g. for STAT samples, or medium priority or low priority.

The various data sets (test data, patient data, tube data, sample data and priority data) may be partially redundant with one another, in that one or more pieces of information may belong to more than one data set.

The data reading unit may be connected to the computing unit discussed below, wherein the computing unit may be configured to process the first data obtained by the reading unit. In other words, the data reading unit may read the first data from the sample tube in a "raw form" and the computing unit may extract the actual information content of the first data, e.g. by applying image recognition and/or by accessing a database.

Exemplarily, the reading of first data by the data reading unit may provide a check of the sample tube. In particular, once the sample tube is moved to a laboratory, there may be a need to read the first data from the sample tube; if this turns out not to be possible, the processing of the sample in that sample tube may be substantially delayed or even aborted. An issue with reading the first data may arise, for instance, when the first data are read from a barcode which was manually affixed to the sample tube, and the barcode is e.g. not well attached, not machine-readable because of folds or bad print and so on.

Accordingly, in one example, the apparatus (e.g. its computing unit) may be configured to output an error signal if the first data cannot be read by the reading unit. The error signal may be a visual or auditive signal. For instance, the apparatus may comprise an output unit, such as a screen, for outputting the error signal. Therefore a user, e.g. a physician or a phlebotomist, is notified of the problem and may fix it, so that no issues arise when it is too late, i.e. when the sample tube is already at the laboratory.

The sample tube may be manually held at the reading position by a user while the reading takes place. Alternatively, in a particular example, the apparatus may further comprise a tube receiving unit, wherein the reading position is at the tube receiving unit. In particular, the tube receiving unit may be configured to provide support for the sample tube so that the sample tube is kept at the reading position. Exemplarily, the tube receiving unit may hold the sample tube in a specific orientation, such as upright. Thus, when the sample tube is held by the tube receiving unit, the sample tube is at the reading position. The tube receiving unit may comprise the trigger sensor described above, or the data reading unit may comprise the trigger sensor.

For instance, the tube receiving unit may comprise a container into which at least part of the sample tube (e.g. the lower half or third of the sample tube) may be inserted, so that the sample tube is stable at the reading position. The container may be in the shape of a hollow cylinder and may be sized to fittingly accommodate the sample tube. In another instance, the tube receiving unit may comprise a vertical bar and a lateral support extending from the vertical bar, the lateral support being configured to hold the sample tube in position. The lateral support may have a ring shape and be located at a given height along the vertical bar, such that the sample tube is stable at the reading position once it engages with the lateral support, e.g. once it is inserted through the ring.

The tube receiving unit may be configured such that it enables a clear reading by the data reading unit. In other words, the tube receiving unit may be configured not to prevent the data reading unit from reading the first data. For example, at least a portion of the tube receiving unit that covers a part of the sample tube (e.g. a barcode or its cap) needed for the reading may be transparent or may be cut out (i.e. the tube receiving unit may comprise a slit or hole).

The data reading unit and the tube receiving unit may be rigidly connected to one another, i.e. such that their distance is fixed. For instance, the data reading unit and the tube receiving unit may be mounted on a common base.

The apparatus further comprises a detection unit comprising at least one sensor. When the tube rack is at a detection position, one or more sensors of the detection unit are configured to detect the presence of at least one sample tube in the tube rack. Accordingly, the at least one sensor may also be configured to detect the presence of the tube rack.

The detection position is a physical location, e.g. on a surface such as a desktop or a countertop, and it is defined in relation to the apparatus, in particular in relation to the at least one sensor. In other words, the detection position may be such that the tube rack, when located there, is at a given or predetermined distance (and/or orientation) with respect to the apparatus, in particular the at least one sensor.

Since the tube rack and the apparatus are extended objects, i.e. not point-like, the detection position may be such that a specific element or area of the tube rack is at the given distance from a specific element or area of the apparatus. For example, the bottom surface or the top surface of the tube rack may be at a given distance from a sensor of the detection unit.

In other cases, each of a plurality of elements or areas of the tube rack may be at a respective given distance from a corresponding element or area of a plurality of elements/areas of the apparatus. For example, there may be a first distance between the bottom surface (or the top surface) of the tube rack and the sensor of the detection unit and a second distance between the data storage element of the tube rack and the computing unit of the apparatus (described below).

The detection position may be considered as the position at which the tube rack should be placed in order to be able to interact with the apparatus. In particular, the detection position is a physical location defined in relation to the at least one sensor and it is defined such that it enables the sensor(s) to detect one or more sample tubes in the tube rack.

The detection unit may be configured to enable the tube rack to be located at the detection position. In one example, the detection unit may merely indicate the detection position without physically constraining the tube rack into the detection position. For instance, the detection unit may comprise a light-emitting unit (e.g. laser emitter) configured to project a pattern indicating the detection position. The light-emitting unit may project the pattern on a horizontal surface on which the apparatus is located. In another instance, the detection unit may comprise a basis, e.g. a plate made of plastic or metal, onto which the pattern indicating the detection position is marked, e.g. etched. Exemplarily, the pattern may trace the contour of a tube rack base, e.g. the pattern may have a rectangular shape. A user may place the tube rack at the detection position by following the pattern, e.g. ensuring that the base of the tube rack matches the pattern.

In another example, the detection unit may physically constrain the tube rack into the detection position. For instance, the detection unit may comprise a holding unit configured to hold the tube rack at the detection position. The holding unit may comprise one or more features configured to engage one or more complementary features of the tube rack, so that the tube rack may not be accidentally removed from the detection position.

For example, the holding unit may be a plate comprising a recess into which the tube rack base may be inserted and/or a protrusion configured to keep the tube rack confined, e.g. a perimeter wall that surrounds the tube rack once it is in the detection position. In particular, the perimeter wall may enclose an area having exactly the shape and size of the tube rack base, so as to securely hold the tube rack.

In some cases, the holding unit may comprise recesses and/or protrusions that correspond to matching protrusions and/or recesses of a tube rack having a quadratic or otherwise axially symmetric base shape, wherein said recesses and/or protrusions of the holding unit and the tube rack may be arranged such that the tube rack can be placed at the detection position in only one orientation. The only allowed orientation may be defined as being at 0° and the matching features of the holding unit and the tube rack may prevent the tube rack from being placed in an orientation rotated by 90°, 180° or 270° around the symmetry axis with respect to the allowed orientation. Accordingly, the holding unit may be configured to hold the tube rack at the detection position in a specific orientation.

In case the detection unit comprises a holding unit, the holding unit may further comprise a portion to which the data reading unit and the tube receiving unit may be affixed.

As mentioned, the detection unit comprises at least one sensor for detecting the presence of at least one sample tube in the tube rack, when the tube rack is in the detection position. In one example, one sensor may be configured to detect the presence of one sample tube. In another example, one sensor may be configured to detect the presence of a plurality of sample tubes.

In some cases, the detection unit may comprise a sensor for each receptacle of the tube rack. Accordingly, the detection unit may comprise a plurality of sensors, corresponding to the plurality of receptacles of the tube rack, wherein the arrangement/grid of sensors is congruent with the arrangement/grid of receptacles. In other words, the sensors may have a spatial arrangement based on the spatial arrangement of the receptacles. For example, the position of each sensor may substantially coincide with the position of the respective receptacle when the tube rack is at the detection position.

Detecting the presence implies determining whether there is a sample tube in the tube rack at all. The presence is a binary property, i.e. it can only take one of two values, "present/absent".

In a particular example, the at least one sensor may be further configured to detect the location of the at least one sample tube in the tube rack when the tube rack is at the detection position. In other words, the at least one sensor may detect not only the presence, but also the specific location of the sample tube within the tube rack, indicated e.g. by row-column coordinates. For instance, if the tube rack has six rows and six columns of receptacles, the at least one sensor may identify that a sample tube is in the receptacle at the intersection of the second column and the third row. Exemplarily, the location detection may be achieved by using a plurality of sensors placed at different locations, each sensor being configured to detect the presence of a tube.

The presence (and optionally also location) of the sample tube in the tube rack may be detected according to different techniques. In particular, the at least one sensor may comprise at least one of: light sensor, weight sensor, camera sensor. In case the detection unit comprises a plurality of sensors, the sensors may be all of the same kind or of different kinds.

Exemplarily, a light sensor, such as a photo-resistor, may be used in a case in which each receptacle is transparent and/or has a hole at its bottom. If the receptacle is empty, i.e. in the absence of a sample tube, the light sensor can detect the ambient light passing through the receptacle/hole. If a sample tube is present in the tube rack, specifically in the receptacle, the sample tube blocks light, so that the light sensor can determine that there is a sample tube.

A weight sensor may measure the overall weight of the tube rack, which, of course, increases every time a sample tube is inserted in the tube rack. Accordingly, the weight sensor may detect the presence of a sample tube by measuring an increase in the weight.

A camera sensor may capture images of the tube rack and a sample tube may be recognized in the images. The camera sensor may be a top-down camera, i.e. taking pictures of a top surface of the tube rack, or a bottom-up camera, i.e. taking pictures of a bottom surface of the tube rack. In the latter case, the receptacles may be transparent and/or comprise a hole at the bottom.

The at least one sensor is connected to the computing unit that will be discussed in detail below, wherein the computing unit processes the data received from the at least one sensor. In case the detection unit comprises a holding unit, the at least one sensor may be affixed to the holding unit, e.g. mounted on it or integrated within it. For instance, a top-down camera may be mounted on a pole vertically extending from the base of the holding unit, while a weight sensor may be integrated within the holding unit.

In a particular example, the apparatus may further comprise a volume measuring unit configured to measure a volume of a sample in the sample tube. The volume measuring unit may comprise a camera sensor and/or a weight sensor, so that the volume may be inferred from visual detection or from a weight measurement. In some examples, the sensor of the volume measuring unit may act as trigger sensor (discussed above) as well.

For instance, through visual detection by means of a camera a type of tube, specifically the shape, and a liquid level of the sample may be determined. These pieces of information may be processed and combined, e.g. by the computing unit, to obtain the volume of the sample. In another instance, the weight may be divided by a density value, e.g. by the computing unit, to obtain the volume. If all samples are of the same substance (e.g. blood), the density value may be a fixed value available to the computing unit. In other cases, the type of sample may be identified via visual detection and an appropriate density value may be chosen by the computing unit based on this identification.

Exemplarily, the apparatus (e.g. its computing unit) may be configured to output an error signal if the measured volume does not satisfy one or more requirements, e.g. if the measured volume is lower than a predetermined threshold. The one or more requirements may be contained in the test data, which may be available to the computing unit as part of the first data via its connection to the reading unit or may be retrieved by the computing unit from a remote database e.g. of a physician information system (PIS) or hospital information system (HIS). The error signal may be a visual or auditive signal. For instance, the apparatus may comprise an output unit, such as a screen, for outputting the error signal.: Therefore a user, e.g. a physician or a phlebotomist, is notified of the problem and may correct the volume of the sample, e.g. by adding sample material or taking an entirely new sample tube.

The volume measuring unit may be configured to measure a volume of a sample in the sample tube when the sample tube is at the reading position or when the sample tube is in the tube rack. Accordingly, exemplarily, the volume measuring unit may be at the tube receiving unit or at the holding unit. The volume measuring unit may share at least some components with the reading unit or with the detection unit. For example, in some cases, a camera sensor may be used for reading the first data and for measuring the sample volume, or a weight sensor may be used for detecting the position of a sample tube in the tube rack and for measuring the sample volume.

The apparatus further comprises a computing unit configured to write second data to the data storage element when the at least one sensor detects the presence of the sample tube in the tube rack, wherein the sample tube contains a sample. In other words, the detection of a sample tube in the tube rack triggers a writing operation by the computing unit to the data storage element in the tube rack. As explained above, a prerequisite for such a detection by the at least one sensor is that the tube rack is at the detection position.

The computing unit comprises a processing unit and a memory. The computing unit communicates wirelessly with the data storage element to write data thereon. Exemplarily, the computing unit may comprise an RIFD writer or transceiver. The computing unit may be accommodated in the holding unit, if present.

The computing unit may be configured to process the information received by the at least one sensor. Once the information indicates that a sample tube has been placed in the tube rack, the computing unit starts the writing operation. In other words, the computing unit may be programmed such that, in response to the placement of a new sample tube in the tube rack, it transmits second data to the data storage element to be stored thereon.

The second data pertain to the sample tube whose presence is detected by the at least one sensor. Exemplarily, the second data may comprise one or more of: rack data, test data, patient data, tube data, sample data, priority data, insertion time data, data about a location of the at least one sample tube in the tube rack. The second data comprise at least part of the first data. In a particular example, the second data may comprise at least: a sample tube identifier, the sample tube location in the rack, the insertion time, the priority of the sample tube and test data.

The rack data may comprise information about the tube rack and may include (but is not limited to) for example one or more of the following: rack manufacturing information (e.g. location and date of production), rack material information, lifetime limit information, globally unique identifier (GUID), rack physical dimensions, location and pitch of the tube receptacle pattern, insertion depth for tubes, information about the bottom shape of the tube receptacle, preferred orientation of the tube barcodes, rack color, tube insertion and removal force.

The insertion time data comprise the insertion time, i.e. the moment in time at which the sample tube was placed in the tube rack, as detected by the at least one sensor. For example, the computing unit may assign a timestamp to the moment in which the sensor data are processed and reveal the presence of a sample tube.

The data about a location of the at least one sample tube in the tube rack comprise information about the exact position of the sample tube within the tube rack. For instance, if the tube rack has receptacles organized in rows and columns, the location of the sample tube in the tube rack is given by information about the row and about the column. As mentioned, the at least one sensor may be configured to detect such a location.

Other data in the second data (such as test data, patient data, tube data, sample data, priority data) may be available to the computing unit as part of the first data via its connection to the reading unit and/or may be retrieved by the computing unit from a remote database e.g. of a physician information system (PIS) or hospital information system (HIS). Accordingly, in some examples, the computing unit may be configured to access the PIS or HIS.

In one example, the computing unit may obtain at least a sample tube identifier via the data reading unit (i.e. as part of the first data) and may retrieve additional data on the basis of the sample tube identifier from the database. In particular, the computing unit may operate under the assumption that the sample tube previously read by the data reading unit is the sample tube just placed in the tube rack, or, said otherwise, that a sample tube is processed by the apparatus in that the sample tube is first placed at the reading position and then in the tube rack. Accordingly, the computing unit may adopt the last sample tube identifier read by the data reading unit as sample tube identifier for the sample tube detected in the tube rack.

In another example, the apparatus may comprise an input unit configured to receive the sample tube identifier e.g. by a user and the computing unit may retrieve additional data on the basis of the sample tube identifier from the database.

In yet another example, the apparatus may be in communication an external device, such as a barcode printer, that generates an identifier for a sample tube, e.g. in the form of a barcode to be attached to the sample tube. The external device may communicate the sample tube identifier as soon as it is generated and the computing unit may operate under the assumption that the next sample tube that is placed in the tube rack is associated to that sample tube identifier.

In some examples, the second data are partially or completely encrypted. In other words, the computing unit is configured to encrypt some or all of the second data prior to storing them in the data storage element.

Writing the second data to the data storage element of the tube rack, which is then transported to the laboratory, improves the processing of the samples in the sample tubes. In particular the registering of the samples at the laboratory side is streamlined, thereby reducing the turnaround time. Further, the gapless tracking of samples from collection to analysis reduces the chance of mistakes due to incorrect assignment of tests to samples or incorrect identification of the sample tubes. Additionally, the quality of the samples may be ensured, e.g. by means of a controlled clotting process thanks to the transmission of data such as the clotting time.

The computing unit may exemplarily be further configured to make the second data available to a remote computer system, e.g. a LIS. For instance, the computing unit may upload the second data to a location (e.g. a cloud storage) to which the remote computer system has access or the computing unit may transmit the second data to the remote computer system. If the laboratory receives e.g. test requests upfront, it can already prepare for the arrival of the sample tubes, thereby making the processing more efficient.

The remote computer system may alternatively be a HIS, a PIS or part of a laboratory automation system (LAS). Exemplarily, the computing unit may be configured to make the second data available to more than one remote computer system.

As mentioned, the computing unit may be connected to the reading unit and, thus, have the first data at its disposal. The computing unit is further configured to provide, based on the first data, an indication of a location for the sample tube in the at least one sample rack. Accordingly, before the sample tube is placed in the tube rack, e.g. while the sample tube is at the reading position, the computing unit may provide e.g. to a user an indication of where the sample tube should be exactly accommodated in the tube rack.

The indication is provided on the basis of the first data, meaning that the location is chosen based on the first data, e.g. based on priority data and/or tube data and/or sample data. Alternatively or additionally, information that may influence the choice of the location (e.g. priority or weight of the sample or the tube type of the sample tube) may be provided to the computing unit via an input unit of the apparatus.

In other cases, the choice of the location may not depend on features of the sample tube and its sample, but may be rather motivated by considerations about the distribution of sample tubes in the tube rack. For example, a roughly balanced distribution in terms of weight may be desired, even in a case in which the tube rack is not filled up. Accordingly, the computing unit may follow a predetermined pattern of locations in the tube rack. In other words, the computing unit may be configured to provide the indication by sequentially going through a predetermined list of locations.

In a particular example, the detection unit may comprise a plurality of position indicators, wherein the computing unit may be configured to cause the detection unit to activate one or more of the position indicators in order to provide the indication, when the tube rack is at the detection position. A position indicator may be a light source (e.g. including an LED or a laser diode) that may be turned on to indicate a location in the tube rack. In some cases, the light beam may form a point of light at the location to be indicated, wherein the beam may originate from above the tube rack.

Exemplarily, the position indicators may be part of the holding unit, when present. For instance, if the receptacles of the tube rack have holes at the bottom, the position indicators may be placed in the holding unit and configured to emit light through the holes. Accordingly, the holding unit may comprise the plurality of position indicators.

In another example, the apparatus may comprise an output unit, e.g. a screen, and the computing unit may show a representation of the tube rack on the screen with a visual indication of the position at which the tube should be placed.

If the at least one sensor is also configured to detect a location and not just the presence of the sample tube, in some examples the computing unit may be further configured to output an error signal when the sample tube is not in the location previously indicated. The error signal may be a visual or auditive signal. For instance, the apparatus may comprise an output unit, such as a screen, for outputting the error signal.

Accordingly, the loading of the sample tubes in the tube rack may be improved, in that e.g. possible mismatches between a sample tube and a receptacle in the tube rack are prevented, a sample tubes distribution is optimized and/or a correct positioning of STAT samples is ensured.

It should be noted that even if a location is suggested, when writing the sample tube location data as part of the second data, it is always the actual location of the sample tube that is recorded.

In a particular example, the apparatus may further comprise an input unit and an output unit, wherein: the input unit is configured to receive patient identification data, and the computing unit is further configured to retrieve, based on the patient identification data, test data, and to provide via the output unit, based on the test data, tube type data about one or more types of sample tube to be used. According to this example, the apparatus may be used to provide indications to a user, e.g. a phlebotomist or a physician, on which type of sample tube to choose for collecting a specific sample. Thus, a user may operate the apparatus to perform these operations of the apparatus prior to drawing a sample.

The input unit may comprise e.g. one or more of a touch screen, a keyboard and a mouse. The patient identification data comprise an identifier of the patient, such as their full name or a unique alphanumeric string previously associated to the patient. The input patient identification data are received by the computing unit via the input unit and, in response, the computing unit looks up in a remote database, e.g. of a PIS or HIS, a test order associated with the patient identification data. The computing unit retrieves the test data concerning one or more tests that shall be performed on the sample to be taken from the patient identified by the patient identification data.

The computing unit may then determine which type or types of sample tube are suitable for collecting a sample that has to undergo the test(s) specified by the test data. The suitability may depend on e.g. a required volume of the sample and/or a piece of equipment that the sample tube must be processed in. The determination may be made on the basis of pre-existing associations, which may be stored in the memory of the computing unit or in a storage accessible by the computing unit. Accordingly, tube type data about one or more types of sample tube to be used may be retrieved. The tube type data may comprise text and/or images and they are provided to a user via the output unit.

In one example, the output unit may comprise a screen and the computing unit may be configured to display the tube type data on the screen. In another example, the output unit may be a printer and the computing unit may be configured to print the tube type data. In yet another example, the output unit may be a loudspeaker and the tube type data may be output in the form of sound (e.g. audio description of the sample tube).

Presenting the user with tube type data reduces or eliminates the chance of an erroneous choice of the sample tube, which may, for example, make a second sample drawing necessary or cause a problem during the processing of the sample at the laboratory due to an incompatibility with the equipment.

In some cases, it may not be possible to retrieve test data based on the patient identification data, e.g. if the prescription of tests is not digitalized. If no test data can be retrieved based on the patient identification data, the computing unit may be further configured to provide a prompt for inputting the test data, and the input unit may be further configured to receive the test data. The prompt may be provided via the output unit and it may cue a user to provide the necessary test data. The prompt may be visual (e.g. a form on a touch screen) or audio.

Summarizing, the apparatus as described above may be used at a first location where a sample is taken from a patient, such as a hospital, a physician's office or a phlebotomist office, in order to improve processing of the sample at a second location, such as a laboratory, in particular by minimizing the risk of errors and streamlining the handling of the sample tubes.

The apparatus may be stationary or mobile (e.g. battery driven) and may be configured to be used while resting on a horizontal surface, such as a countertop. The different units of the apparatus may be fixedly or removably connected to each other.

Another aspect of the present invention relates to a system comprising: an apparatus as described heretofore, and a tube rack comprising a data storage element and at least one receptacle for accommodating at least one sample tube.

The tube rack is configured to receive, to hold, to align, and/or to retain one or more sample tubes in a safe position, preferably in an upright position. The tube racks may be used to introduce sample tubes into and remove sample tubes from automation equipment, e.g. a tube analyzer system. The sample tube rack may be configured to keep multiple different types and/or sizes of sample tubes centered with their receptacles so automation equipment may effectively interact with the sample tubes. Exemplarily, restraining elements may be provided for steadily holding the sample tubes.

The tube rack may be substantially shaped like a cuboid and/or a box. The tube rack may comprise an upper surface, wherein at least one upper opening for receiving the sample tube is provided in the upper surface and a supporting surface, wherein at least one supporting position for supporting the sample tube is provided in the supporting surface. The supporting position is aligned with the upper opening in a vertical direction.

The at least one supporting position may comprise a recess which is shaped substantially convergent, particularly substantially conically, and is configured to receive and/or bear a sample tube bottom, in particular a sample tube bottom of a predetermined type. The at least one supporting position may comprise a hole configured to let light through, such that the light is visible from the upper opening. In particular, the position and size of the hole may be configured to allow light from a position indicator (as discussed previously).

When a sample tube is in the tube rack, the closed tube bottom may rest above and/or abut against the supporting position of the tube rack, while the second end of the sample tube is arranged and held above and outside of the sample tube rack. In this vertical position, the upper end of the sample tube protrudes out of the sample tube rack and may be grabbed by a robot.

In a particular example, the sample tube rack may comprise a plurality of upper openings and a corresponding plurality of supporting positions arranged. The plurality of upper openings may be arranged in a grid formed by row and columns.

Exemplarily, the tube rack may be the tube rack described in EP application 15 003 260.

A laboratory automation system not covered by the claimed subject-matter may be configured to receive a tube rack, the tube rack comprising a data storage element and holding at least one sample tube containing a sample. The laboratory automation system comprises:
- a processing unit configured to read second data from the data storage element and to
   communicate the second data to a laboratory information system;
- a transport unit configured to remove the at least one sample tube from the tube rack;
- an analysis unit configured to analyze the sample based on the second data; wherein the processing unit is configured to delete the second data from the data storage element after the at least one sample tube is removed from the tube rack.

The processing unit may comprise an RFID transceiver and it may read an identifier of the tube rack from the data storage element together with the second data. The laboratory automation system may be interfaced with the LIS of the laboratory and the processing unit may send the second data to the LIS. Accordingly, the samples tubes in the tube rack and the information related thereto are automatically entered in the LIS, making the process more efficient.

The transport unit may include e.g. one or more robotic arms and one or more conveyors to pick the sample tube from the tube rack and transport it to the different locations. If the tube rack holds a plurality of sample tubes, the transport unit may move the sample tubes in a sequence based on the second data, e.g. on the priority of the samples. In other words, the transport unit may be configured to remove the plurality of sample tubes from the tube rack according to a priority of the plurality of sample tubes.

Once the sample tube is removed from the tube rack, it may be transported to an analysis unit. The analysis unit is configured to analyze the sample in the at least one sample tube based on the second data, in particular based on test data. In other words, the analysis unit is configured to carry out the test(s) prescribed e.g. by a physician according to the test request. Exemplarily, the analysis unit may comprise a plurality of pieces of lab equipment, including pieces configured to prepare the sample before the actual analysis, such as a centrifuge. The transport unit may also move the sample tube within the analysis unit.

After all the sample tubes held by the tube rack are removed from the tube rack by the transport unit, the processing unit is configured to delete the second data from the data storage element of the tube rack. In this way, the tube rack may be reused.

In line with what described above, another aspect of the present invention relates to a computer-implemented method comprising: reading, by a data reading unit, first data from a sample tube when the sample tube is at a reading position; detecting, by at least one sensor, the presence of the sample tube in a tube rack, wherein the tube rack comprises a data storage element; providing, based on the first data, an indication of a location for the sample tube in the tube rack; and writing, by a computing unit, second data to the data storage element when the sample tube is in the tube rack, wherein the sample tube is not contained in the tube rack (30) when at the reading position; and the second data comprise at least part of the first data.

In a particular example, the method may further comprise making the first data and/or second data available to a remote computer system, e.g. at a laboratory.

This method carried out by the apparatus may be seen in a larger context as part of a workflow that starts at the first location where the sample is collected and ends at the laboratory once the sample has been analyzed. A merely illustrative example of such a workflow involving the apparatus and the laboratory automation system discussed heretofore is described in the following.

The workflow for an apparatus comprising a touch screen as input/output unit may comprise the following steps:

### At the sample collecting location

1. A phlebotomist places a tube rack at the detection position, e.g. on the holding unit
2. The computing device reads out the data storage element of the tube rack
3. The phlebotomist draws blood from patient, puts it in a sample tube that has an indicium attached to it
4. The phlebotomist places the sample tube at the tube receiving unit or holds the sample tube at the reading position
5. The data reading unit reads the indicium if possible. If not possible, the computing unit provides an error indication, prompting the phlebotomist to fix the indicium
6. The computing unit retrieves test data:
   a. through an interface to local PIS / HIS, or
   b. provides a form on the touch screen to let the phlebotomist fill out the test data
7. The volume measuring unit measures a volume of the sample and the computing unit verifies it against requirements. In case there is too little or too much volume in the tube, the computing unit provides an error indication, prompting the phlebotomist to add or sample material or redraw the sample
8. The computing unit indicates the position on the rack at which the sample tube should be placed, e.g. by activating position indicators or by providing an indication on a representation of the rack on the screen
9. The phlebotomist places the sample tube at the indicated position in the tube rack
10. The computing unit writes second data on the data storage element, in particular:
   a. Sample tube identifier
   b. Location of the sample tube in the tube rack (e.g. row + column information, e.g. "B4")
   c. Priority of the sample (e.g. STAT, routine priority 1 to n)
   d. Insertion date and time
   e. Test data
11. Steps 3 - 10 are repeated until the tube rack is full or there are no more sample tubes to place
12. Once the rack is full or there are no more new sample tubes, the phlebotomist removes the rack from the detection position
13. The phlebotomist places the rack in a transport box
14. The transport box is transported to the laboratory
   At the laboratory
15. The lab personnel unpacks the transport box
16. The lab personnel puts the tube rack onto the lab automation system
17. The processing unit of the lab automation system reads the tube rack ID and the second data from the data storage element
18. The communication unit of the lab automation system transfers the test data to the LIS
19. A robotic arm of the lab automation system picks sample tubes in the sequence of their assigned priority
20. The lab automation system processes the sample tubes as intended
21. The computing unit of the lab automation system erases the second data from the data storage element
22. Empty tube racks are packed in the transport box and carried back to the sender (rotation system)

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1 shows a perspective view from above of an exemplary apparatus.
Figure 2 shows a side view of an exemplary apparatus.
Figure 3 shows a top view of an exemplary apparatus.
Figure 4 shows a perspective view from above of an exemplary apparatus with a tube rack.
Figure 5 shows a perspective view from above of an exemplary apparatus with a tube rack holding sample tubes.

### Detailed Description

In the following, a detailed description of examples will be given with reference to the drawings. It should be understood that various modifications to the examples may be made. Unless explicitly indicated otherwise, elements of one example may be combined and used in other examples to form new examples.

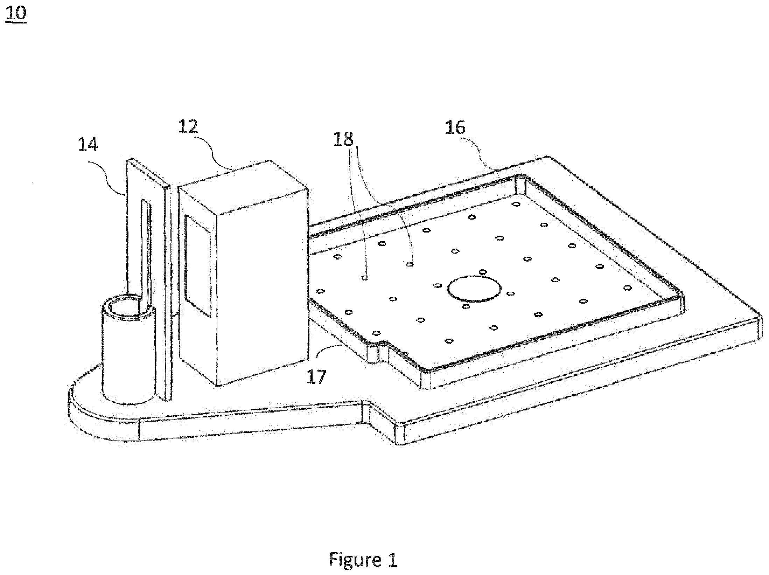

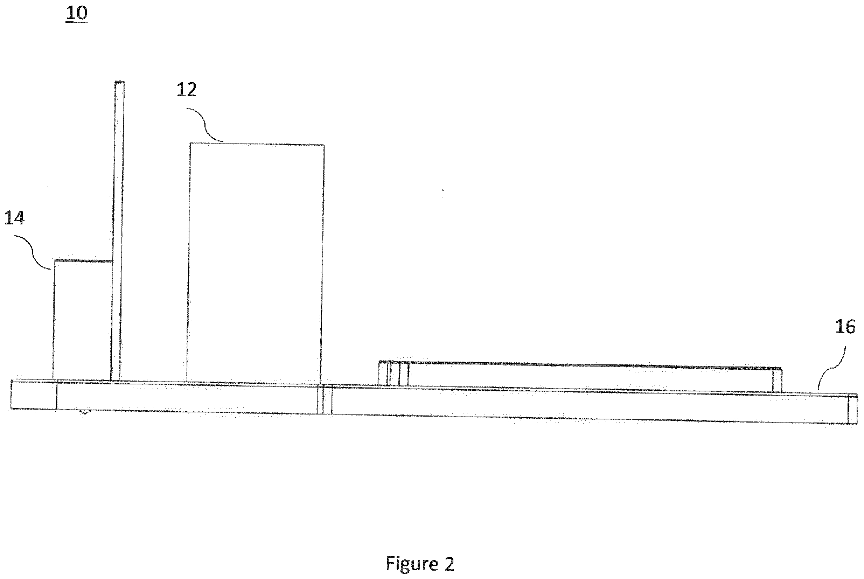

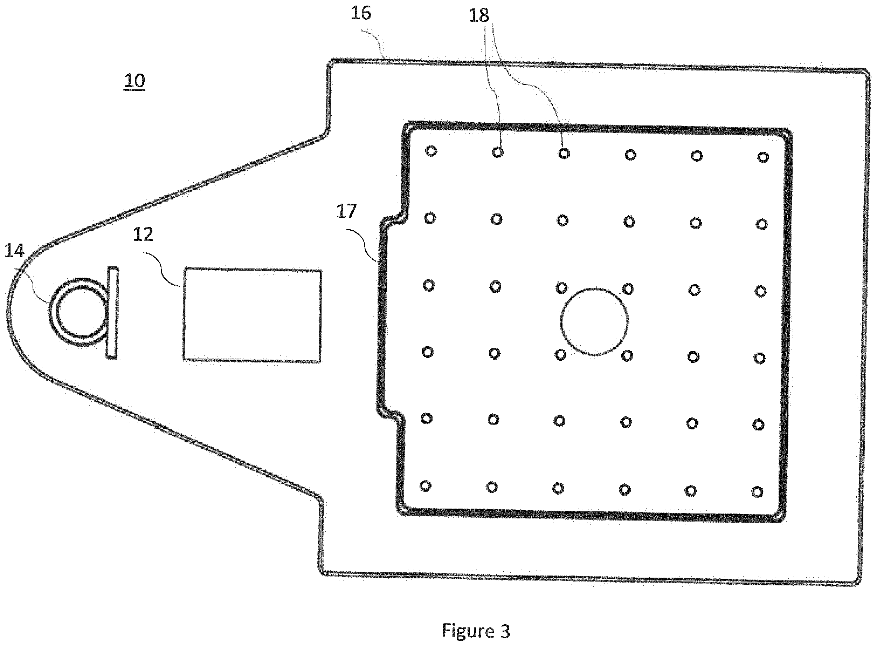

**Figure 1** shows a perspective view from above of an exemplary apparatus 10. The apparatus 10 comprises a data reading unit 12, a tube receiving unit 14, a detection unit comprising a holding unit 16 and a plurality of sensors 18, and a computing unit (not visible) arranged within the holding unit 16. **Figure 2** shows a side view of the apparatus 10 and **Figure 3** shows a top view of the apparatus 10.

The holding unit 16 of the detection unit serves as support for the whole apparatus 10, so that the data reading unit 12, the tube receiving unit 14, the sensors 18 and the computing unit are physically connected to each other by means of the holding unit 16.

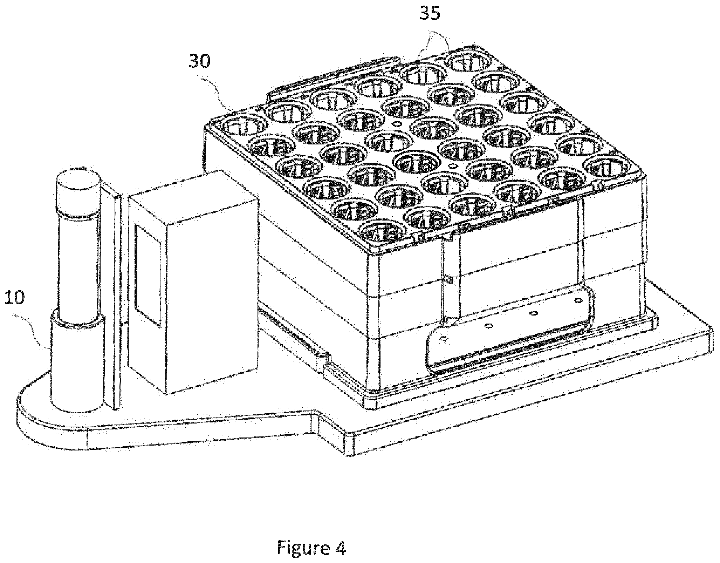

The holding unit 16 is a plate (made e.g. of plastic) that comprises a protrusion configured to receive a tube rack 30, in particular in the form of a perimeter wall that is configured to surround the tube rack 30 once it is placed within the perimeter wall, as shown in **Figure 4****.** The perimeter wall has a square shape with a protrusion 17 only one side, which is configured to engage a respective recess located only on one side of the base of the tube rack 30. The tube rack 30 can only be placed within the perimeter wall if the side of the tube rack 30 with the recess is placed in correspondence of the protrusion 17. Accordingly, the perimeter wall not only confines the tube rack 30 at a specific position, the detection position, but also in a specific orientation.

When the tube rack is at the detection position, the plurality of sensors 18 are configured to detect the presence of one or more sample tubes in the tube rack. In particular, each sensor 18 is configured to detect the presence of a sample tube. The plurality of sensors is arranged in a grid having columns and rows (e.g. 6x6) that reflects the way the receptacles are arranged in the tube rack 30. Accordingly, when the tube rack 30 is at the detection position, there is a sensor 18 located substantially below each receptacle. In this way, it is possible to use the plurality of sensors 18 to detect not only that a sample tube is present in the tube rack, but also in which receptacle the sample tube is held.

The plurality of sensors 18 are light sensors and are configured to detect the ambient light passing through holes in the receptacles. In particular, each receptacle of the tube rack 30 has a hole in its bottom.

The plurality of sensors 18 are located under respective apertures in the upper surface of the holding unit 16. Accordingly, the holding unit 16 may comprise a plurality of apertures.

The holding unit 16 of the detection unit further comprises a plurality of position indicators, which are located substantially at the same positions as the plurality of sensors 18. In other words, below each aperture there is a position indicator and a sensor 18. Each position indicator is a light source (e.g. a LED) that is turned on to indicate a location in the tube rack, namely a specific receptacle.

The data reading unit 12 and the tube receiving unit 14 are affixed to the holding unit 16 at a position outside the perimeter wall. The data reading unit 12 is configured to read first data from a sample tube when the sample tube is arranged within the tube receiving unit 14. The position of the sample tube when it is held at the tube receiving unit 14 is the reading position. The first data are stored in a barcode affixed to the sample tube, which contains a sample.

The data reading unit 12 comprises an optical scanner configured to read barcodes and the tube receiving unit 14 is located at a distance from the data reading unit 12 that enable the optical scanner to read the barcode. The optical scanner is oriented vertically and the tube receiving unit 14 is configured to hold the sample tube substantially upright, as shown in Figure 4.

To fulfill its function, the tube receiving unit 14 comprises a hollow container that has substantially a cylindrical shape and has a height lower than the height of all kinds of sample tubes, so that it is easy to insert and remove the sample tube. The cross-section of the container is configured to accommodate all kinds of sample tubes, i.e. the cylinder has a diameter at least equal to the greatest tube diameter.

The container comprises a slit on the side facing the data reading unit 12 in order to make the barcode visible for the optical scanner. The slit in the container is part of a longer slit in a plate placed vertically adjacent to the container. As more clearly seen in Figure 3, the vertical plate is tangential to the container. Accordingly, the tube receiving unit 14 further comprises the plate, which is configured to further support the sample tube at the reading position. The plate has a height greater than the container, e.g. more than twice. The height of the container and of the plate is the dimension in the direction perpendicular to the holding unit 16.

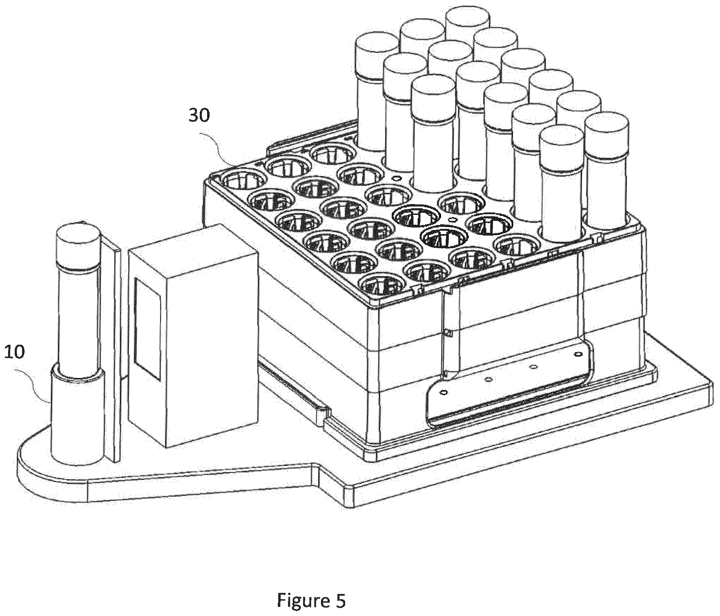

Therefore, when a sample tube is accommodated at the tube receiving unit 14, as shown in Figures 4 and 5, the barcode of the sample tube is positioned on the side with the slit and the first data encoded therein can be read by the optical scanner located opposite the slit. As shown in these figures, the sample tube is not held within the tube rack 30 while at the reading position.

The first data may comprise one or more of: test data, patient data, tube data, sample data and priority data. In particular, the first data comprise at least a sample tube identifier.

The apparatus 10 obtains via its data reading unit 12 the first data, which may already contain test data (including a test request for the sample in the sample tube) or may enable the computing unit to retrieve the test data (e.g. by looking up the sample tube identifier in the database of the PIS or HIS). Other pieces of information of the first data (e.g. priority data) may be similarly obtained.

While the sample tube is at the reading position, the computing unit causes the detection unit to activate one of the position indicators to indicate in which receptacle 35 the sample tube should be placed. A user can then move the sample tube from the tube receiving unit 14 to the designated receptacle in the tube rack 30 while it is in the detection position.

The sensor 18 below the designated receptacle 35 (or a different receptacle 35 chosen by the user) detects the presence of the sample tube and sends a signal to the computing unit, which stores the location of the sample tube (based on the location of the sensor) and the time (and date) at which the sample tube was detected in the tube rack 30.

When the sensor 18 detects the presence of the sample tube in the tube rack 30, the computing unit is configured to write second data to the data storage element (e.g. a chip of an RFID tag) in the tube rack 30. The second data may comprise one or more of: rack data, test data, patient data, tube data, sample data, priority data, insertion time data, data about a location of the at sample tube in the tube rack. In an example, the second data comprise: a sample tube identifier, the sample tube location in the rack, the insertion time (and date), the priority of the sample tube and test data.

The procedure can be repeated for a plurality of sample tubes, as shown in **Figure 5****.** Each sample tube is first placed at the reading position and then in the tube rack 30, which is at the detection position. When the sample tube is at the reading position, first data are read from (a barcode on) the sample tube and when the sample tube is transferred to a receptacle in the tube rack 30 second data are written to the data storage element of the tube rack 30. Accordingly, the data storage element contains data about all the sample tubes held in the tube rack 30.

## Claims

1. An apparatus (10) configured to interact with a tube rack (30), the tube rack (30) comprising a data storage element, wherein the apparatus (10) comprises:
- a data reading unit (12) configured to read first data from a sample tube when the sample tube is at a reading position with respect to the data reading unit (12), wherein the sample tube is not contained in the tube rack (30) when at the reading position;
- a detection unit comprising at least one sensor (18) configured to detect the presence of the sample tube in the tube rack (30) if the tube rack is at a detection position with respect to the at least one sensor (18);
- a computing unit configured to:
provide, based on the first data, an indication of a location for the sample tube in the tube rack (30); and
write second data to the data storage element when the at least one sensor (18) detects the presence of the sample tube in the tube rack (30), wherein the second data comprise at least part of the first data.

2. The apparatus (10) of claim 1, wherein the at least one sensor (18) is further configured to detect the location of the sample tube in the tube rack (30) when the tube rack is at the detection position and wherein optionally the at least one sensor comprises at least one of: light sensor, weight sensor, camera sensor, wherein optionally the camera sensor is a top-down camera or a bottom-up camera.

3. The apparatus (10) of any one of the preceding claims, wherein the first data comprise one or more of: test data, patient data, tube data, sample data and priority data,
and/or
wherein the second data comprise one or more of: rack data, test data, patient data, tube data, sample data, priority data, insertion time data, data about a location of the sample tube in the tube rack (30), wherein optionally the second data are partially or completely encrypted.

4. The apparatus (10) of claim 3, wherein the computing unit is configured to make at least a portion of the second data available to a remote computer system.

5. The apparatus (10) of any one of the preceding claims further comprising a tube receiving unit (14), wherein the reading position is at the tube receiving unit (14).

6. The apparatus (10) of any one of the preceding claims further comprising a volume measuring unit configured to measure a volume of a sample in the sample tube.

7. The apparatus (10) of any one of claims 1 to 6, wherein the detection unit further comprises a plurality of position indicators and the computing unit is configured to cause the detection unit to activate one or more of the position indicators.

8. The apparatus (10) of claim 2, wherein the computing unit is further configured to output an error signal when the detected location of the sample tube is not the indicated location.

9. The apparatus (10) of any one of the preceding claims further comprising an input unit and an output unit, wherein:
the input unit is configured to receive patient identification data, and
the computing unit is further configured to retrieve, based on the patient identification data,
test data, and to provide via the output unit, based on the test data, tube type data about one or more types of sample tubes to be used.

10. The apparatus (10) of claim 9, wherein the output unit is a screen and the computing unit is configured to display the tube type data on the screen; or
wherein the output unit is a printer and the computing unit is configured to print the tube type data.

11. The apparatus (10) of claim 9 or 10, wherein, if no test data can be retrieved based on the patient identification data:
the computing unit is further configured to provide a prompt for inputting the test data, and
the input unit is further configured to receive the test data.

12. A system comprising:
an apparatus (10) according to any one of the preceding claims, and
a tube rack (30) comprising a data storage element and at least one receptacle (35) for accommodating at least one sample tube.

13. A computer-implemented method comprising:
reading, by a data reading unit (12), first data from a sample tube when the sample tube is at a reading position;
detecting, by at least one sensor (18), the presence of the sample tube in a tube rack (30), wherein the tube rack comprises a data storage element;
providing, based on the first data, an indication of a location for the sample tube in the tube rack (30); and
writing, by a computing unit, second data to the data storage element when the sample tube is in the tube rack (30), wherein:
the sample tube is not contained in the tube rack (30) when at the reading position; and
the second data comprise at least part of the first data.

## Patentansprüche

1. Eine Vorrichtung (10), die konfiguriert ist, um mit einem Röhrchen-Ständer bzw. -Gestell (*tube rack*) (30) zusammenzuwirken, wobei das Röhrchen-Gestell (30) ein Datenspeicherelement umfasst, wobei die Vorrichtung (10) Folgendes umfasst:
- eine Datenleseeinheit (12), die konfiguriert ist, um erste Daten aus einem Probenröhrchen zu lesen, wenn sich das Probenröhrchen in Bezug auf die Datenleseeinheit (12) in einer Leseposition befindet, wobei das Probenröhrchen nicht im Röhrchen-Gestell (30) enthalten ist, wenn es sich in der Leseposition befindet;
- eine Erfassungseinheit, die mindestens einen Sensor (18) umfasst, der konfiguriert ist, um das Vorhandensein des Probenröhrchens im Röhrchen-Gestell (30) zu erfassen, wenn sich das Röhrchen-Gestell in Bezug auf den mindestens einen Sensor (18) in einer Erfassungsposition befindet;
- eine Recheneinheit, die konfiguriert ist, um Folgendes zu bewerkstelligen:
Bereitstellen, auf der Grundlage der ersten Daten, einer Anzeige eines Ortes für das Probenröhrchen im Röhrchen-Gestell (30); und
Schreiben zweiter Daten in das Datenspeicherelement, wenn der mindestens eine Sensor (18) das Vorhandensein des Probenröhrchens im Röhrchen-Gestell (30) erfasst, wobei die zweiten Daten zumindest einen Teil der ersten Daten umfassen.

2. Die Vorrichtung (10) nach Anspruch 1, wobei der mindestens eine Sensor (18) ferner konfiguriert ist, um die Position des Probenröhrchens im Röhrchen-Gestell (30) zu erfassen, wenn sich das Röhrchen-Gestell in der Erfassungsposition befindet, und wobei optional der mindestens eine Sensor mindestens einen der folgenden umfasst: einen Lichtsensor, einen Gewichtssensor, einen Kamerasensor, wobei optional der Kamerasensor eine Top-Down-Kamera oder eine Bottom-Up-Kamera ist.

3. Die Vorrichtung (10) nach irgendeinem der vorstehenden Ansprüche, wobei die ersten Daten eines oder mehrere der folgenden Elemente umfassen: Testdaten, Patientendaten, Röhrchendaten, Probendaten und Prioritätsdaten umfassen, und/oder
wobei die zweiten Daten eines oder mehrere der folgenden Elemente umfassen: Gestelldaten, Testdaten, Patientendaten, Röhrchendaten, Probendaten, Prioritätsdaten, Einführungszeitdaten, Daten über einen Ort des Probenröhrchens im Röhrchen-Gestell (30), wobei optional die zweiten Daten teilweise oder vollständig verschlüsselt sind.

4. Die Vorrichtung (10) nach Anspruch 3, wobei die Recheneinheit konfiguriert ist, um zumindest einen Teil der zweiten Daten für ein entferntes Computersystem verfügbar zu machen.

5. Die Vorrichtung (10) nach irgendeinem der vorstehenden Ansprüche, die ferner eine Röhrchenaufnahme-Einheit (14) umfasst, wobei sich die Leseposition an der Röhrchenaufnahme-Einheit (14) befindet.

6. Die Vorrichtung (10) nach irgendeinem der vorstehenden Ansprüche, die ferner eine Volumenmesseinheit umfasst, die konfiguriert ist, um das Volumen einer Probe im Probenröhrchen zu messen.

7. Die Vorrichtung (10) nach irgendeinem der Ansprüche von 1 bis 6, wobei die Erfassungseinheit ferner eine Vielzahl von Positionsanzeigen umfasst, und wobei die Recheneinheit konfiguriert ist, um die Erfassungseinheit zu veranlassen, eine oder mehrere der Positionsanzeigen zu aktivieren.

8. Die Vorrichtung (10) nach Anspruch 2, wobei die Recheneinheit ferner konfiguriert ist, um ein Fehlersignal auszugeben, wenn die erfasste Position des Probenröhrchens nicht die angezeigte Position ist.

9. Die Vorrichtung (10) nach irgendeinem der vorstehenden Ansprüche, die ferner eine Eingabeeinheit und eine Ausgabeeinheit umfasst, wobei:
die Eingabeeinheit konfiguriert ist, um Patientenidentifikations-Daten zu empfangen, und wobei
die Recheneinheit ferner konfiguriert ist, um auf der Grundlage der Patientenidentifikations-Daten Testdaten abzurufen, und um über die Ausgabeeinheit auf der Grundlage der Testdaten Röhrchentyp-Daten über einen oder mehrere Typen von zu verwendenden Probenröhrchen bereitzustellen.

10. Die Vorrichtung (10) nach Anspruch 9, wobei die Ausgabeeinheit ein Bildschirm ist und die Recheneinheit konfiguriert ist, um die Röhrchentyp-Daten auf dem Bildschirm anzuzeigen; oder
wobei die Ausgabeeinheit ein Drucker ist, und die Recheneinheit konfiguriert ist, um die Röhrchentyp-Daten zu drucken.

11. Die Vorrichtung (10) nach Anspruch 9 oder 10, wobei, wenn keine Testdaten auf der Grundlage der Patientenidentifikations-Daten abgerufen werden können:
die Recheneinheit ferner konfiguriert ist, um eine Aufforderung zur Eingabe der Testdaten bereitzustellen, und
die Eingabeeinheit ferner konfiguriert ist, um die Testdaten zu empfangen.

12. Ein System, das Folgendes umfasst:
eine Vorrichtung (10) nach irgendeinem der vorstehenden Ansprüche, und
ein Röhrchen-Ständer bzw. -Gestell (*tube rack*) (30), das ein Datenspeicherelement und mindestens ein Behältnis (35) zur Aufnahme mindestens eines Probenröhrchens umfasst.

13. Ein computerimplementiertes Verfahren, das Folgendes umfasst:
Lesen, durch eine Datenleseeinheit (12), von ersten Daten aus einem Probenröhrchen, wenn sich das Probenröhrchen in einer Leseposition befindet;
Erfassen, durch mindestens einen Sensor (18), des Vorhandenseins des Probenröhrchens in einem Röhrchen-Gestell (30), wobei das Röhrchen-Gestell ein Datenspeicherelement umfasst;
Bereitstellen, auf der Grundlage der ersten Daten, einer Anzeige eines Ortes für das Probenröhrchen im Röhrchen-Gestell (30); und
Schreiben, durch eine Recheneinheit, zweiter Daten in das Datenspeicherelement, wenn sich das Probenröhrchen im Röhrchen-Gestell (30) befindet, wobei:
das Probenröhrchen nicht im Röhrchen-Gestell (30) enthalten ist, wenn es sich in der Leseposition befindet; und wobei
die zweiten Daten zumindest einen Teil der ersten Daten umfassen.

## Revendications

1. Un appareil (10) configuré pour interagir avec un portoir de tubes (*tube rack*) (30), le portoir de tubes (30) comprenant un élément de stockage de données, sachant que l'appareil (10) comprend :
- une unité de lecture de données (12) configurée pour lire des premières données depuis un tube d'échantillonnage lorsque le tube d'échantillonnage se trouve dans une position de lecture par rapport à l'unité de lecture de données (12), sachant que le tube d'échantillonnage n'est pas contenu dans le portoir de tubes (30) lorsqu'il se trouve dans la position de lecture ;
- une unité de détection comprenant au moins un capteur (18) configuré pour détecter la présence du tube d'échantillonnage dans le portoir de tubes (30) si le portoir de tubes se trouve dans une position de détection par rapport au ou aux capteurs (18) ;
- une unité informatique configurée pour :
fournir, sur la base des premières données, une indication de l'emplacement du tube d'échantillonnage dans le portoir de tubes (30) ; et pour
écrire des deuxièmes données dans l'élément de stockage de données lorsque le au moins un capteur (18) détecte la présence du tube d'échantillonnage dans le portoir de tubes (30), sachant que les deuxièmes données comprennent au moins une partie des premières données.

2. L'appareil (10) d'après la revendication 1, sachant que le au moins un capteur (18) est en outre configuré pour détecter l'emplacement du tube d'échantillonnage dans le portoir de tubes (30) lorsque le portoir de tubes se trouve en position de détection, et sachant que facultativement le au moins un capteur comprend au moins l'un des éléments suivants :
un capteur de lumière, un capteur de poids, un capteur de caméra, sachant que facultativement le capteur de caméra est une caméra descendante (*top-down*) ou une caméra ascendante (*bottom-up*)*.*

3. L'appareil (10) d'après l'une quelconque des revendications précédentes, sachant que les premières données comprennent une ou plusieurs parmi : des données de test, des données de patient, des données de tube, des données d'échantillon et des données de priorité, et/ou
sachant que les deuxièmes données comprennent une ou plusieurs parmi : des données de portoir, des données de test, des données de patient, des données de tube, des données d'échantillon, des données de priorité, des données de temps d'insertion, des données concernant un emplacement du tube d'échantillon dans le portoir de tubes (30), sachant que facultativement les deuxièmes données sont partiellement ou totalement cryptées.

4. L'appareil (10) d'après la revendication 3, sachant que l'unité informatique est configurée pour mettre au moins une partie des deuxièmes données à la disposition d'un système informatique distant.

5. L'appareil (10) d'après l'une quelconque des revendications précédentes, comprenant en outre une unité de réception de tubes (14), sachant que la position de lecture se situe au niveau de l'unité de réception de tubes (14).

6. L'appareil (10) d'après l'une quelconque des revendications précédentes, comprenant en outre une unité de mesure de volume configurée pour mesurer un volume d'un échantillon dans le tube d'échantillonnage.

7. L'appareil (10) d'après l'une quelconque des revendications de 1 à 6, sachant que l'unité de détection comprend en outre une pluralité d'indicateurs de position, et que l'unité informatique est configurée pour amener l'unité de détection à activer un ou plusieurs des indicateurs de position.

8. L'appareil (10) d'après la revendication 2, sachant que l'unité informatique est en outre configurée pour émettre un signal d'erreur lorsque l'emplacement détecté du tube d'échantillonnage n'est pas l'emplacement indiqué.

9. L'appareil (10) d'après l'une quelconque des revendications précédentes, comprenant en outre une unité d'entrée et une unité de sortie, sachant que :
l'unité d'entrée est configurée pour recevoir des données d'identification de patient, et que
l'unité informatique est en outre configurée pour récupérer, sur la base des données d'identification de patient, des données de test, et pour fournir via l'unité de sortie, sur la base des données de test, des données de type de tube concernant un ou plusieurs types de tubes d'échantillonnage à utiliser.

10. L'appareil (10) d'après la revendication 9, sachant que l'unité de sortie est un écran, et que l'unité informatique est configurée pour afficher les données de type de tube sur l'écran ; ou
sachant que l'unité de sortie est une imprimante, et que l'unité informatique est configurée pour imprimer les données de type de tube.

11. L'appareil (10) d'après la revendication 9 ou 10, sachant que, si aucune donnée de test ne peut être récupérée sur la base des données d'identification de patient :
l'unité informatique est en outre configurée pour fournir une invite pour la saisie des données de test, et que
l'unité d'entrée est en outre configurée pour recevoir les données de test.

12. Un système comprenant :
un appareil (10) d'après l'une quelconque des revendications précédentes, et
un portoir de tubes (30) comprenant un élément de stockage de données et au moins un réceptacle (35) destiné à accueillir au moins un tube d'échantillonnage.

13. Un procédé d'implémentation informatique comprenant le fait de :
lire, par une unité de lecture de données (12), des premières données à partir d'un tube d'échantillonnage lorsque le tube d'échantillonnage se trouve dans une position de lecture ;
détecter, par au moins un capteur (18), la présence du tube d'échantillonnage dans un portoir de tubes (30), sachant que le portoir de tubes comprend un élément de stockage de données ;
fournir, sur la base des premières données, une indication d'un emplacement du tube d'échantillonnage dans le portoir de tubes (30) ; et de
écrire, par une unité informatique, des deuxièmes données dans l'élément de stockage de données lorsque le tube d'échantillonnage se trouve dans le portoir de tubes (30), sachant que :
le tube d'échantillonnage n'est pas contenu dans le portoir de tubes (30) lorsqu'il est en position de lecture ; et que
les deuxièmes données comprennent au moins une partie des premières données.
